# EUROPEAN PATENT SPECIFICATION

(11) **EP 3 562 363 B1**
(45) Date of publication and mention of the grant of the patent: **23.03.2022**
(21) Application number: 17886626.5
(22) Date of filing: 22.12.2017
(51) Int. Cl.: A47K 3/28, E03B 1/04, E03C 1/04, H04L 29/08

(54) **METHOD FOR ADAPTING A WATER RECYCLING DEVICE TO A USER PREFERENCE**
VERFAHREN ZUR ANPASSUNG EINER WASSERAUFBEREITUNGSVORRICHTUNG AN EINE BENUTZERPRÄFERENZ
PROCÉDÉ D'ADAPTATION D'UN DISPOSITIF DE RECYCLAGE D'EAU À UNE PRÉFÉRENCE UTILISATEUR

(30) Priority: 30.12.2016 SE 1651760
(43) Date of publication of application: 06.11.2019
(73) Proprietor: Orbital Systems AB, 211 20 Malmö (SE)
(72) Inventor: MAHDJOUBI NAMIN, Amir Mehrdad, 211 20 Malmö (SE)
(74) Representative: AWA Sweden AB
(86) International application number: PCT/SE2017/051338
(87) International publication number: WO 2018/124962

(56) References cited:
- WO-A1-2004/101902
- WO-A1-2004/101902
- WO-A1-2009/147647
- WO-A1-2013/095278
- DE-A1- 10 033 479
- GB-A- 2 535 713
- US-A- 4 870 986
- US-A1- 2014 277 817
- US-A1- 2014 373 926
- US-A1- 2016 281 338

## Description

### Technical field

The systems and methods described herein generally relates to the field of water recycling. More particularly, concepts for adapting a water recycling device to a user preference are presented.

### Background

The use of water recycling devices, such as a showers, are highly individual and dependent on user preferences. In addition, user preferences may vary not only between users, but also between uses by the same user.

A number of modifications has been made to water recycling devices in order to accommodate to user preferences. For example, there exist a variety of nozzles providing different experiences when using the water recycling devices. In addition, some water recycling devices have been provided with several functions aiming to cover user preferences of a wide group of users. Document WO2004101902 A1 discloses a traditional water recycling system.

However, there still exist a need for improvement of water recycling devices with respect to adjusting the water recycling device to user preferences.

### Summary of the invention

It is an object of the present inventive concept to mitigate, alleviate or eliminate one or more of the above-identified deficiencies in the art and disadvantages singly or in combination.

According to a first aspect, these and other objects are achieved in full, or at least in part, by a method for adjusting a water recycling device to a user preference profile. The water recycling device comprises: an outlet configured to output treated water; a drain for collecting used water output from said outlet; a recirculation loop in liquid communication with said drain and said outlet, said recirculation loop comprising a water treatment arrangement for treating said used water; an external water path in liquid communication with said recirculation loop, said external water path being connected to an external water outlet; a circulation pump for providing a flow in said water recycling device; and a sensor arrangement configured to measure a water quality parameter of water in said water recycling device. The method comprises receiving data indicating an upcoming use of said water recycling device by a user; processing said data in order to determine a probability of use of said water recycling device by said user within a time period; and if said probability of use exceeds a threshold, adjusting a number of operating parameters of said water recycling device according to a user preference profile associated with said user.

The recirculation loop may comprise a heating arrangement for heating water in said water recycling device.

The number of operating parameters may comprise at least one operating parameter selected from the group consisting of an output water temperature, an output flow rate, and an output duration.

The number of operating parameters may be adjusted such that the same vary over time during a period of use of said water recycling device.

The data may comprise internal data generated by said water recycling device.

The data may comprise external data generated by an external device communicatively connected to said water recycling device.

The data may comprise historical data related to said number of operating parameters of said water recycling device.

The data may be compared to said user preference profile in order to determine said probability of use of said water recycling device.

The water recycling device may be an appliance or an arrangement of appliances. In particular, the water recycling device may be a water recycling shower.

Further, the term 'water recycling device' may be understood to as a water recirculating device, e.g. a device which is configured to recirculate at least part of the water output by the device itself.

Any of the steps of processing said data and adjusting a number of operating parameters may be performed by a processing device, e.g. a prediction engine. Such a processing device need not necessarily be arranged in the water recycling device, but may be e.g. a cloud processing device, or an external processing device.

According to a second aspect it is provided a method for generating a user preference profile for a water recycling device comprising: an outlet configured to output treated water; a drain for collecting used water output from said outlet; a recirculation loop in liquid communication with said drain and said outlet, said recirculation loop comprising a water treatment arrangement for treating said used water; an external water path in liquid communication with said recirculation loop, said external water path being connected to an external water outlet; a circulation pump for providing a flow in said water recycling device; and a sensor arrangement configured to measure a water quality parameter of water in said water recycling device. The method may comprise receiving data associated with a number of uses of said water recycling device; identifying a user group of said water recycling device based on said data, wherein said user group comprises a number of users; determining a number of operating parameters of said water recycling device associated with at least one use of said water recycling device by at least one of said number of users; and generating a user preference profile comprising at least part of said number of operating parameters for said at least one of said number of users.

The method may further comprise updating said user preference profile identifying said user preference profile; receiving user preference feedback indicative of a user preference of said user; updating said user preference profile according to said user preference feedback.

The user preference feedback may be received from said user via an interface communicating with said water recycling device.

The user preference feedback may be based on observed behavior of said at least one of said number of users.

According to a third aspect it is provided a system comprising a water recycling device comprising an outlet configured to output treated water; a drain for collecting used water output from said outlet; a recirculation loop in liquid communication with said drain and said outlet, said recirculation loop comprising a water treatment arrangement for treating said used water; an external water path in liquid communication with said recirculation loop, said external water path being connected to an external water outlet; a circulation pump for providing a flow in said water recycling device; and a sensor arrangement configured to measure a water quality parameter of water in said water recycling device; and a prediction engine configured to receive data indicating an upcoming use of said water recycling device by a user; process said data in order to determine a probability of use of said water recycling device by said user; and adjust a number of operating parameters of said water recycling device according to a user preference profile associated with said user if said probability of use exceeds a pre-determined threshold.

A feature described in relation with one aspect may also be incorporated in other aspects, and the advantage of the feature is applicable to all aspects in which it is incorporated.

Other objectives, features and advantages will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present inventive concept, will be better understood through the following illustrative and non-limiting detailed description of different embodiments of the present inventive concept, with reference to the appended drawings, wherein:
FIG. 1 schematically illustrates an example of a water recycling device;
FIG. 2 schematically illustrates an example of a system comprising a water recycling device, a prediction engine, and a number of external devices;
FIG. 3 schematically illustrates a number of operating parameters for a water recycling device;
FIG. 4 schematically illustrates data indicating an upcoming use of a water recycling device by a user;
FIG. 5 schematically illustrates an example of an update of a user preference profile;
FIG. 6 is a flow chart diagram of an example of a method for adjusting a water recycling device to a user preference profile;
FIG. 7 is a flow chart diagram of an example of a method for generating a user preference profile for a water recycling device.

### Detailed description

In general, it has been realized that user preferences may vary between uses, and that such user preferences may be analyzed over a period of time. In such an analysis, user preferences may take the form of data pertinent to historical behavior of the user. Since the use of water recycling devices, such as showers, often are part of daily routines, a predictive pattern with respect to user preferences may be determined, and a user preference profile may be generated in order to adjust the water recycling device to the user's preferences. By comparing the predicted data with actual observed data, user preference profiles can be updated such that the preferences of the user associated with the user preference profile can be further predicted with even greater accuracy.

The present disclosure describes a water recycling device. Initially, some terminology may be defined to provide clarification for the following disclosure.

The term 'drain' referred to in the present disclosure is not to be given the conventional meaning of a drain; a conventional drain is a fixture that provides an exit-point for waste water. In the present disclosure, the term 'drain' may be exchanged for a collecting arrangement, a sensor tank, a recirculation tank, or a floor unit. The term 'drain' implies a point leading to a e.g. a sewage, but wherein the drain does in fact not form part of the sewage itself. In particular, the drain may comprise the sensor arrangement or at least part of the sensor arrangement.

Throughout the present disclosure reference is made to "internal data". Internal data may be data generated by the water recycling device. For example, internal data may be data from a sensor arrangement of the water recycling device. Internal data may comprise data related to a use of the water recycling device, such as a timestamp. Internal data may comprise data related to a number of operating parameters of the water recycling device.

Throughout the present disclosure reference is made to "external data". External data may be data generated by an external device. Such an external device may for example be a smart device, a smart appliance, a smart car, or any other type of external device. Such an external device is preferably able to communicate with the external device and/or another device communicatively couple with the water recycling device. External data may also be generated by other water recycling devices communicatively coupled with the water recycling device.

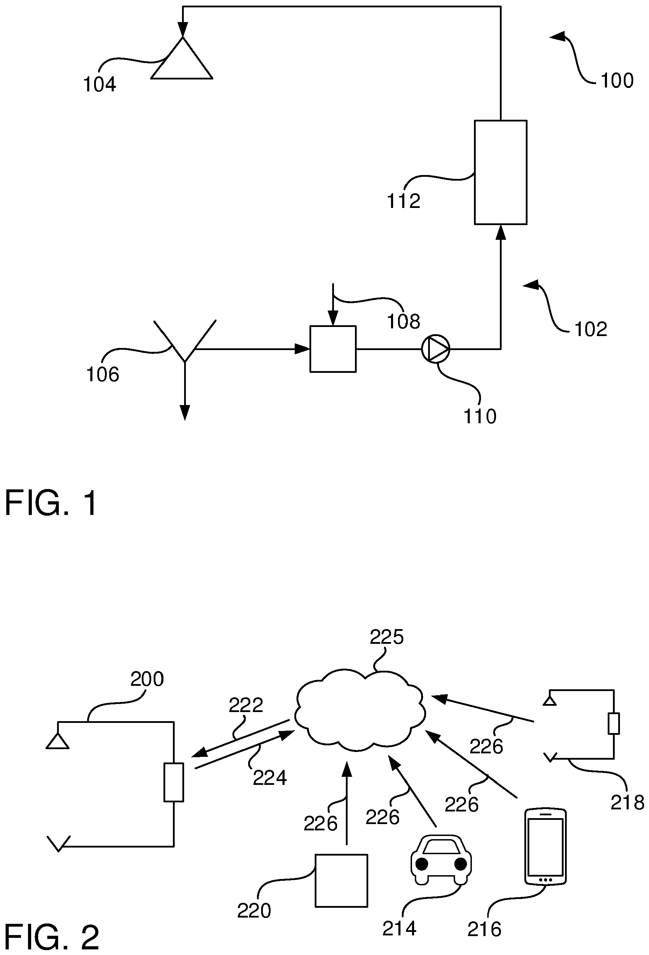

With reference to FIG. 1, a water recycling device 100 is shown. The water recycling device 100 comprises an outlet 104 configured to output water. The outlet 104 may be a showerhead, a nozzle, or the like. The water recycling device further comprises a drain 106 for collecting used water output by the outlet 104; a recirculation loop 102 in liquid communication with the drain 106 and the outlet 104, the recirculation loop comprising a water treatment arrangement 112 for treating the used water. The water recycling device may further comprise a heating arrangement for heating water in the water recycling device 100. The water recycling device further comprises a sensor arrangement configured to measure a water quality parameter of water in said water recycling device. The water recycling device 100 further comprises an external water path 108 in liquid communication with the recirculation loop, the external water path 108 being connected to an external water outlet. Water from the external water path 108 may hereafter be referred to as external water. The water recycling device 100 may further comprise a circulation pump 110. The circulation pump 110 may provide for at least part of a flow of water in the water recycling device 100. A water treatment arrangement 112 may be placed downstream of the circulation pump 110. The water treatment arrangement 112 may comprise a filter arrangement and/or a UV light treatment arrangement. The water treatment arrangement 112 may comprise at least one filter, such as a nanofilter, a microfilter, or a nanofilter and a microfilter. The water treatment arrangement 112 may comprise at least one particle filter and at least one microbiological filter. The water treatment arrangement 112 may comprise at least one active substance for reducing harmful effects of microorganisms in water passing the water treatment arrangement 112. Such an active substance may for example be contained within a filter media of the filter, and/or be released to the water inside the water treatment arrangement 112. Water which has been treated by the water treatment arrangement 112 may hereafter be referred to as treated water. The heating arrangement may comprise a UV light treatment arrangement. The heating arrangement may be combined with the water treatment arrangement 112.

According to the present disclosure, data indicating an upcoming use of a water recycling device by a user may be processed in order to determine a probability of use of the water recycling device by the user. Such data may be internal data generated by the water recycling device, and/or external data generated by an external device. If the probability of use exceeds a pre-determined threshold, a number of operating parameters of the water recycling device may be adjusted according to a user preference profile associated with the user.

The user preference profile may be generated by receiving data associated with a number of uses of the water recycling device. Such a number of uses may span a period of time. A user group may be determined based on the data, wherein the user group comprises a number of users. In one example, the user group may be a family, and the number of users comprises members of the family. The user group may comprise a single user. A number of operating parameters of the water recycling device may then be determined, wherein the number of operating parameters are associated with at least one use of the water recycling device by at least one of the number of users. In one example, the water recycling device is installed in a hotel or the like, and each of the number of users in the user group may be associated with a user preference profile. The user preference profile may be linked to a booking system of the hotel. Hereby, during a period of time, it is likely that the water recycling device is only used by known users, namely users staying in a room of the hotel where the water recycling device is installed. Thus, a number of user preference profiles can be generated with high accuracy for the users staying in the room of the hotel where the water recycling device is installed.

In this context, it may also be said that a user staying at the hotel may have used a similar water recycling device installed elsewhere, and thus the user may already be associated with a user preference profile. The user preference profile may in this case be transferred to the water recycling device of the hotel, such that the water recycling device of the hotel is adjusted according to the preferences of the user. However, in some cases the user may prefer a different use of the water recycling device of the hotel compared to a use of a water recycling device installed elsewhere. For example, the water recycling device of the hotel may be situated in a warm environment, and thus the user may want a lower temperature of output water compared to a use of the water recycling device installed elsewhere. In this case, the user may be associated with several user preference profiles, wherein the several user preference profiles are connected to a specific water recycling device. The above examples have been described in the context of a hotel, however it is to be understood that similar principles may apply in any other location, such as in public showers or the like.

Initially, for example when the water recycling device has recently been installed, the number of uses may be low, and thus the accuracy of the generated user preference profile with respect to true preferences of a user associated with the user preference profile may be low. However, as the water recycling device is used, the number of uses increases, and the accuracy of the generated user preference profile may increase.

It may also be possible for a user associated with the user preference profile to directly input preferences into the user preference profile. Such preferences may for example be a preferred flow rate, a preferred temperature, a preferred time of day to use the water recycling device, a preferred day of the week to use the water recycling device, or the like. It may also be possible to generate a user preference profile via data received directly from a user.

Another possibility is to utilize external data generated via other water recycling devices. In this case, the user preference profile may be generated by receiving external data from another water recycling device, wherein the external data is associated with a use of the another water recycling device by the user associated with the user preference profile.

It is to be understood that the user preference profile may comprise internal and or external data. The user preference profile may comprise data associated with a number of operating parameters of the water recycling device. The number of operating parameters may comprise at least one operating parameter selected from the group consisting of an output water temperature, an output flow rate, and an output duration. Output water temperature here refers to a temperature of water output by the outlet of the water recycling device. Output flow rate here refers to a flow rate of water output by the outlet of the water recycling device. Output duration here refers to a time period wherein water is output from the water recycling device. By the term "adjusting" any of the number of operating parameters it is to be understood that an adjustment of a part of the water recycling device may be made. For example, adjusting the output water temperature may comprise adjusting a heating profile of the heating arrangement, and/or adjusting an intake of external water from an external water path connected to the water recycling device. The adjustment of the number of operating parameters may be done in such a way that the number of operating parameters vary over time during a period of use of the water recycling device. For example, during a use of the water recycling device, the output water temperature may initially be low, and increase over the period of use of the water recycling device.

Referring now to FIG. 2, an example of a system comprising a water recycling device 200, a number of external devices 214, 216, 218, 220, and a prediction engine 225, is illustrated. Here, the prediction engine 225 receives internal and external data 224, 226, which is processed in order to determine a probability of use of the water recycling device by a user. However, it is to be understood that a probability of use is possible to determine solely by processing internal data 224 or external data 226. If the probability of use of the water recycling device by the user exceeds a pre-determined threshold, a user preference profile 222 associated with the user may be identified by the prediction engine and sent to the water recycling device from the prediction engine. A number of operating parameters of the water recycling device may then be adjusted according to the user preference profile associated with the user.

It may also be possible to store user preference profiles 222 locally in the water recycling device. In this case, the water recycling device may be notified of an upcoming use by the user, and a corresponding user preference profile associated with the user may be identified by the water recycling device. A number of operating parameters of the water recycling device may then be adjusted according to the user preference profile associated with the user.

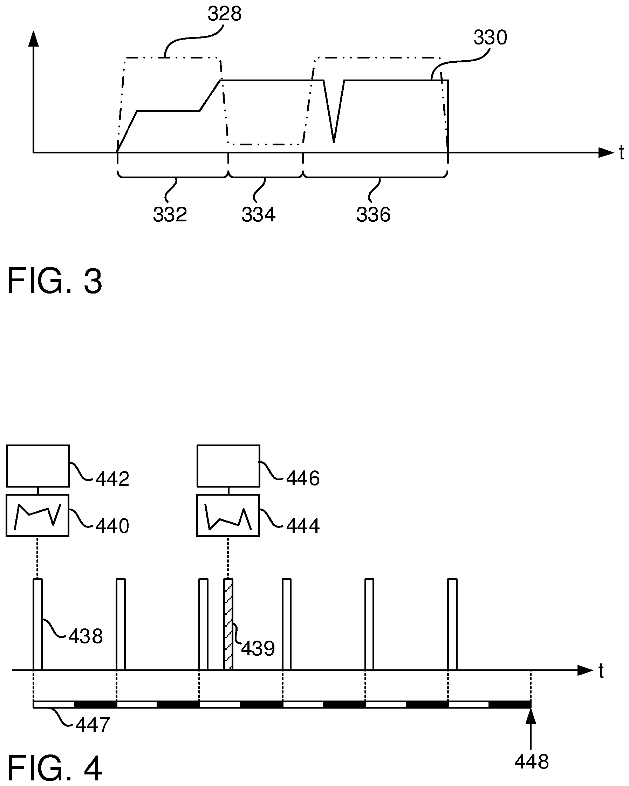

Referring now to FIG. 3, an example of a number of operating parameters is illustrated. The number of operating parameters illustrated may be comprised in a user preference profile. However, it is worth mentioning that the user preference profile may comprise additional operating parameters and/or internal and external data. A flow and temperature profile 328, 330 are here illustrating the output flow rate and output water temperature over time by the water recycling device during a single use by a user. As can be seen a number of time intervals 332, 334, 336 can be determined. The number of time intervals 332, 334, 336 may be determined in relation to any of the flow profiles 328, 330. The number of time intervals may be comprised in the user preference profile associated with the user. A full duration of the use (all of the number of time intervals 332, 334, 336) may be comprised in the user preference profile associated with the user.

Referring now to FIG. 4, an example of data indicating an upcoming use of a water recycling device by a user is illustrated. Here, a number of uses by a first and a second user 438, 439 are shown over a period of time spanning a number of time quantities 447. Such a time quantity 447 may for example be a number of hours, a number of days, or the like. The first and second user may be identified based on historical internal and/or external data. In the illustrated example, a number of uses by the first user 438 have historically occurred at specific time intervals. Such time intervals may for example arise if a user uses the water recycling device once every morning or the like. A probability of an upcoming use by the first user may in the illustrated example be high, based on the user preference profile of the first user. In other words, since the first user has historically used the water recycling device at a specific time, it is likely that the first user will again use the water recycling device at the specific time. In this context, the data indicating an upcoming use of the water recycling device by a user may be said to comprise internal data.

Data indicating an upcoming use of the water recycling device may also comprise external data. Such external data may for example be calendar entries in a user's calendar. Such calendar entries may indicate towards or away from a use of the water recycling device by the user, for example if the user has reserved a room at a hotel located in another city, it is unlikely that the water recycling at home will be used.

External data from a smart phone owned by a user may also be received to indicate an upcoming use. For example, if a wake-up alarm of the smart phone is set to 7 AM in the morning, it may indicate an upcoming use of the water recycling device in the subsequent hour.

Data indicating an upcoming use by a user may also be received by the user identifying himself to the water recycling device. For example, the water recycling device may be equipped with an identification device, such as a fingerprint reader, an RFID reader, a numeral pad, or the like. The user may thus identify himself to the water recycling device before use. With such an arrangement, it may be likely that the water recycling device will be used by the identified user subsequent to an identification via the identification device by the user. Thus, the probability of use may be high, and the correct adjustments of the water recycling device can be made according to the user preference profile of the user.

Further, the water recycling device may be equipped with a Bluetooth^{™} communications device, or similar communications device fulfilling a similar purpose, such that the user can be identified by his or her mobile phone, or other similar device equipped to communicate with the Bluetooth^{™} communications device, when these two devices are communicating, e.g. when the mobile phone of the user is near the water recycling device.

The user may also be, in full or in part, identified based on his or her weight by having a weighing device installed in or under the water recycling device. In addition, or on its own, the user may be identified, in full or in part, by his or her length by having one or several sensors in the water recycling device.

Each of the number of uses by the first and second user 438, 439 may be associated with internal and/or external data 440, 442. The internal data 440 may comprise data relating to a number of operating parameters of the water recycling device during the number of uses.

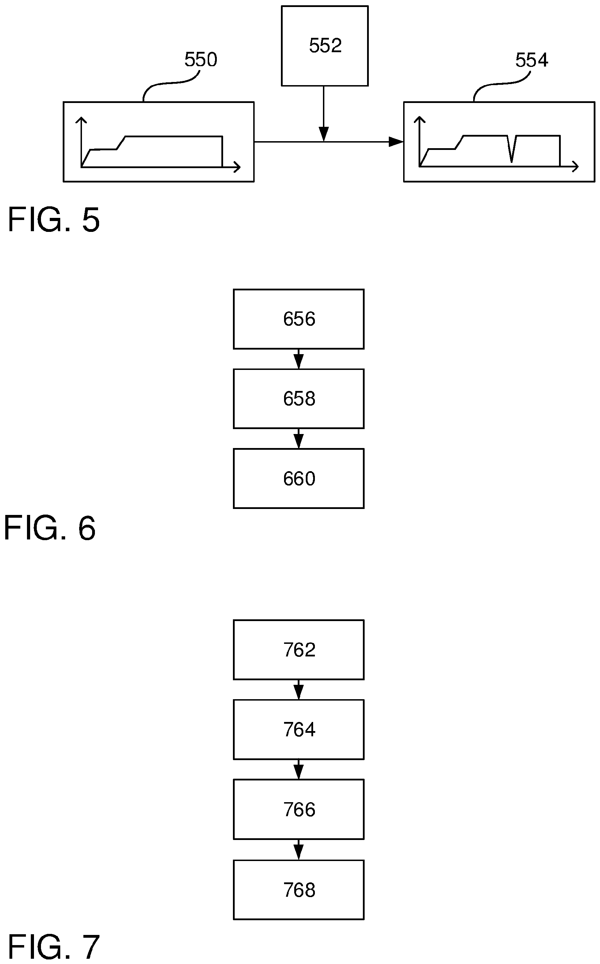

Referring now to FIG. 5, a user preference profile 550 may be updated to more accurately reflect a user's preferences. The user preference profile 550 may be updated by receiving user preference feedback 552 indicative of a user preference of the user, resulting in an updated user preference profile 554. The illustrated user preference profile 550 and updated user preference profile 554 depicts a temperature profile and an updated temperature profile respectively. In this case, the user preference feedback 552 may have been received through the user actively adjusting an output water temperature via an interface of the water recycling device, such as a knob. It may also be possible to receive user preference feedback 552 via an interface of a smart device, such as a smartphone, wherein the user actively inputs user preference feedback 552.

Referring now to FIG. 6, an example of a method for adjusting a water recycling device is illustrated in a flow chart diagram. The method comprises a step of receiving data 656 indicating an upcoming use of the water recycling device by a user; a step of processing the data 658 in order to determine a probability of use of the water recycling device by the user; and if the probability of use exceeds a pre-determined threshold, a step of adjusting 660 a number of operating parameters of the water recycling device according to a user preference profile associated with the user.

Referring now to FIG. 7, an example of a method for generating a user preference profile for a water recycling device is illustrated in a flow chart diagram. The method comprises a step of receiving data 762 associated with a number of uses of the water recycling device; identifying 764 a user group of the water recycling device based on the data, wherein the user group comprises a number of users; determining 766 a number of operating parameters of the water recycling device associated with at least one use of the water recycling device by the at least one of the number of users; and generating 786 a user preference profile comprising at least part of the number of operating parameters for the at least one of the number of users.

A user may also indirectly give user preference feedback. Such user preference feedback may for example be based on observed behavior of the user. In other words, if the user usually uses the water recycling device on a specific day of the week, but suddenly starts to use the water recycling device on another day of the week, the user preference profile associated with the user may be updated with user preference feedback to reflect that the user now prefers to use the water recycling device on the another day of the week.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

### List of reference signs

- 100: Water recycling device
- 102: Recirculation loop
- 104: Outlet
- 106: Drain
- 108: External water path
- 110: Circulation pump
- 112: Water treatment arrangement
- 200: Water recycling device
- 214: External device
- 216: External device
- 218: External device
- 220: External device
- 222: User preference profile
- 224: Internal data
- 225: Prediction engine
- 226: External data
- 328: Flow profile
- 330: Temperature profile
- 332: First time interval
- 334: Second time interval
- 336: Third timer interval
- 438: First user
- 439: Second user
- 440: Internal data
- 442: External data
- 444: Internal data
- 446: External data
- 447: Time quantity
- 448: Upcoming use
- 550: User preference profile
- 552: User preference feedback
- 554: Updated user preference profile
- 656: Step of receiving data
- 658: Step of processing data
- 660: Step of adjusting a number of operating parameters
- 762: Step of receiving data
- 764: Step of identifying a use group
- 766: Step of determining a number of operating parameters
- 768: Step of generating a user preference profile

## Claims

1. A method for adjusting a water recycling device (100) to a user preference profile (222), wherein said water recycling device (100) comprises:
an outlet (104) configured to output treated water;
a drain (106) for collecting used water output from said outlet (104);
a recirculation loop (102) in liquid communication with said drain (106) and said outlet (104), said recirculation loop (102) comprising a water treatment arrangement (112) for treating said used water;
an external water path (108) in liquid communication with said recirculation loop (102), said external water path (108) being connected to an external water outlet;
a circulation pump (110) for providing a flow in said water recycling device (100); and
a sensor arrangement configured to measure a water quality parameter of water in said water recycling device (100);
said method **characterized by** comprising the steps of:
receiving data indicating an upcoming use of said water recycling device (100) by a user;
processing said data in order to determine a probability of use of said water recycling device by said user within a time period; and
if said probability of use exceeds a threshold, adjusting a number of operating parameters of said water recycling device according to a user preference profile (222) associated with said user.

2. The method according to claim 1, wherein said number of operating parameters comprises at least one operating parameter selected from the group consisting of an output water temperature, an output flow rate, and an output duration.

3. The method according to claim 1 or 2, wherein said number of operating parameters are adjusted such that the same vary over time during a period of use of said water recycling device.

4. The method according to any one of the preceding claims, wherein said data comprises internal data 224 generated by said water recycling device.

5. The method according to any one of the preceding claims, wherein said data comprises external data (226) generated by an external device communicatively connected to said water recycling device.

6. The method according to any one of the preceding claims, wherein said data comprises historical data related to said number of operating parameters of said water recycling device.

7. The method according to any one of the preceding claims, wherein said data is compared to said user preference profile in order to determine said probability of use of said water recycling device.

8. The method according to any one of the preceding claims, also intended for generating a user preference profile (222) for a water recycling device (100): said method also comprising the steps of:
receiving data associated with a number of uses of said water recycling device (100);
identifying a user group of said water recycling device (100) based on said data, wherein said user group comprises a number of users;
determining a number of operating parameters of said water recycling device (100) associated with at least one use of said water recycling device by at least one of said number of users; and
generating a user preference profile (222) comprising at least part of said number of operating parameters for said at least one of said number of users.

9. The method according to claim 8, further comprising the step of updating said user preference profile
identifying said user preference profile;
receiving user preference feedback (552) indicative of a user preference of said user;
updating said user preference profile according to said user preference feedback (552).

10. The method according to claim 8 or 9, wherein said user preference feedback is received from said user via an interface communicating with said water recycling device.

11. The method according to any one of claims 8 to 10, wherein said user preference feedback is based on observed behavior of said at least one of said number of users.

12. A system comprising
a water recycling device (10)0 comprising
an outlet (104) configured to output treated water;
a drain (106) for collecting used water output from said outlet (104);
a recirculation loop (102) in liquid communication with said drain (106) and said outlet (104), said recirculation loop (102) comprising a water treatment arrangement (112) for treating said used water;
an external water path (108) in liquid communication with said recirculation loop (102), said external water path (108) being connected to an external water outlet;
a circulation pump (110) for providing a flow in said water recycling device (100); and
a sensor arrangement configured to measure a water quality parameter of water in said water recycling device (100); the system being **characterized by** comprising a prediction engine (225) configured to
receive data indicating an upcoming use of said water recycling device (100) by a user;
process said data in order to determine a probability of use of said water recycling device (100) by said user; and
adjust a number of operating parameters of said water recycling device (100) according to a user preference profile (222) associated with said user if said probability of use exceeds a pre-determined threshold.

## Patentansprüche

1. Verfahren zur Anpassung einer Wasseraufbereitungsvorrichtung (100) an ein Benutzerpräferenzprofil (222), wobei die Wasseraufbereitungsvorrichtung (100) umfasst:
einen Auslass (104), der ausgestaltet ist, um behandeltes Wasser auszugeben;
einen Abfluss (106) zum Auffangen der Brauchwasserausgabe aus dem Auslass (104);
eine Rezirkulationsschleife (102) in Flüssigkeitskommunikation mit dem Abfluss (106) und dem Auslass (104), wobei die Rezirkulationsschleife (102) eine Wasserbehandlungsanordnung (112) zum Behandeln des Brauchwassers umfasst;
einen externen Wasserpfad (108) in Flüssigkeitskommunikation mit der Rezirkulationsschleife (102), wobei der externe Wasserpfad (108) mit einem externen Wasserauslass verbunden ist;
eine Zirkulationspumpe (110) zum Bereitstellen eines Flusses in der Wasseraufbereitungsvorrichtung (100); und
eine Sensoranordnung, die ausgestaltet ist, um einen Wasserqualitätsparameter des Wassers in der Wasseraufbereitungsvorrichtung (100) zu messen;
wobei das Verfahren **dadurch gekennzeichnet ist, dass** es die Schritte umfasst:
Empfangen von Daten, die eine anstehende Verwendung der Wasseraufbereitungsvorrichtung (100) durch einen Benutzer angeben;
Verarbeiten der Daten, um eine Wahrscheinlichkeit der Nutzung der Wasseraufbereitungsvorrichtung durch den Benutzer innerhalb eines Zeitraums zu ermitteln; und
falls die Wahrscheinlichkeit der Nutzung einen Schwellenwert überschreitet, Anpassen einer Anzahl von Betriebsparametern der Wasseraufbereitungsvorrichtung gemäß einem Benutzerpräferenzprofil (222), welches dem Benutzer zugeordnet ist.

2. Verfahren nach Anspruch 1, wobei die Anzahl der Betriebsparameter mindestens einen Betriebsparameter ausgewählt aus der Gruppe bestehend aus einer Ausgabewassertemperatur, einer Ausgabeflussrate und einer Ausgabedauer umfasst.

3. Verfahren nach Anspruch 1 oder 2, wobei die Anzahl der Betriebsparameter angepasst wird, so dass dieselben über die Zeit während eines Benutzungszeitraums der Wasseraufbereitungsvorrichtung variieren.

4. Verfahren nach einem der vorhergehenden Ansprüche, wobei die Daten interne Daten (224) umfassen, die durch die Wasseraufbereitungsvorrichtung erstellt werden.

5. Verfahren nach einem der vorhergehenden Ansprüche, wobei die Daten externe Daten (226) umfassen, die durch eine externe Vorrichtung erstellt werden, die kommunikativ mit der Wasseraufbereitungsvorrichtung verbunden ist.

6. Verfahren nach einem der vorhergehenden Ansprüche, wobei die Daten historische Daten umfassen, die mit der Anzahl der Betriebsparameter der Wasseraufbereitungsvorrichtung in Beziehung stehen.

7. Verfahren nach einem der vorhergehenden Ansprüche, wobei die Daten mit dem Benutzerpräferenzprofil verglichen werden, um die Wahrscheinlichkeit der Nutzung der Wasseraufbereitungsvorrichtung zu ermitteln.

8. Verfahren nach einem der vorhergehenden Ansprüche, das auch zum Erstellen eines Benutzerpräferenzprofils (222) für eine Wasseraufbereitungsvorrichtung (100) vorgesehen ist; wobei das Verfahren auch die Schritte umfasst:
Empfangen von Daten, die einer Anzahl der Nutzungen der Wasseraufbereitungsvorrichtung (100) zugeordnet sind;
Identifizieren einer Benutzergruppe der Wasseraufbereitungsvorrichtung (100) basierend auf den Daten, wobei die Benutzergruppe eine Anzahl von Benutzern umfasst;
Ermitteln einer Anzahl von Betriebsparametern der Wasseraufbereitungsvorrichtung (100), die mindestens einer Nutzung der Wasseraufbereitungsvorrichtung durch mindestens einen von der Anzahl der Benutzer zugeordnet sind; und
Erstellen eines Benutzerpräferenzprofils (222), das mindestens einen Teil der Anzahl von Betriebsparametern für mindestens einen von der Anzahl der Benutzer umfasst.

9. Verfahren nach Anspruch 8, des Weiteren umfassend den Schritt des Aktualisierens des Benutzerpräferenzprofils:
Identifizieren des Benutzerpräferenzprofils;
Empfangen von Benutzerpräferenzrückmeldung (552), welche eine Benutzerpräferenz des Benutzers angibt;
Aktualisieren des Benutzerpräferenzprofils gemäß der Benutzerpräferenzrückmeldung (552).

10. Verfahren nach Anspruch 8 oder 9, wobei die Benutzerpräferenzrückmeldung von dem Benutzer über eine Schnittstelle empfangen wird, die mit der Wasseraufbereitungsvorrichtung kommuniziert.

11. Verfahren nach einem der Ansprüche 8 bis 10, wobei die Benutzerpräferenzrückmeldung auf beobachtetem Verhalten des mindestens einen von der Anzahl der Benutzer basiert.

12. System, umfassend:
eine Wasseraufbereitungsvorrichtung (100), umfassend:
einen Auslass (104), der ausgestaltet ist, um behandeltes Wasser auszugeben;
einen Abfluss (106) zum Auffangen der Brauchwasserausgabe aus dem Auslass (104);
eine Rezirkulationsschleife (102) in Flüssigkeitskommunikation mit dem Abfluss (106) und dem Auslass (104), wobei die Rezirkulationsschleife (102) eine Wasserbehandlungsanordnung (112) zum Behandeln des Brauchwassers umfasst;
einen externen Wasserpfad (108) in Flüssigkeitskommunikation mit der Rezirkulationsschleife (102), wobei der externe Wasserpfad (108) mit einem externen Wasserauslass verbunden ist;
eine Zirkulationspumpe (110) zum Bereitstellen eines Flusses in der Wasseraufbereitungsvorrichtung (100); und
eine Sensoranordnung, die ausgestaltet ist, um einen Wasserqualitätsparameter des Wassers in der Wasseraufbereitungsvorrichtung (100) zu messen; wobei das System **dadurch gekennzeichnet ist, dass** es eine Vorhersage-Engine (225) umfasst, die ausgestaltet ist zum
Empfangen von Daten, die eine anstehende Nutzung der Wasseraufbereitungsvorrichtung (100) durch einen Benutzer angeben;
Verarbeiten der Daten, um eine Wahrscheinlichkeit der Nutzung der Wasseraufbereitungsvorrichtung (100) durch den Benutzer zu ermitteln; und
Anpassen einer Anzahl von Betriebsparametern der Wasseraufbereitungsvorrichtung (100) gemäß einem Benutzerpräferenzprofil (222), das dem Benutzer zugeordnet ist, falls die Wahrscheinlichkeit der Nutzung einen vorgegebenen Schwellenwert übersteigt.

## Revendications

1. Procédé de réglage d'un dispositif de recyclage d'eau (100) sur un profil de préférence utilisateur (222), ledit dispositif de recyclage d'eau (100) comprenant :
une sortie (104) configurée pour délivrer de l'eau traitée ;
un drain (106) pour collecter l'eau usée sortant de ladite sortie (104) ;
une boucle de recirculation (102) en communication liquide avec ledit drain (106) et ladite sortie (104),
ladite boucle de recirculation (102) comprenant un agencement de traitement de l'eau (112) pour traiter ladite eau usée ;
un chemin d'eau externe (108) en communication liquide avec ladite boucle de recirculation (102), ledit chemin d'eau externe (108) étant relié à une sortie d'eau externe ;
une pompe de circulation (110) pour fournir un flux dans ledit dispositif de recyclage d'eau (100) ; et
un agencement de capteur configuré pour mesurer un paramètre de qualité d'eau de l'eau dans ledit dispositif de recyclage d'eau (100) ;
ledit procédé étant **caractérisé en ce qu'**il comprend les étapes de :
réception de données indiquant une utilisation prochaine dudit dispositif de recyclage d'eau (100) par un utilisateur ;
traitement desdites données afin de déterminer une probabilité d'utilisation dudit dispositif de recyclage d'eau par ledit utilisateur dans une période de temps ; et
si ladite probabilité d'utilisation dépasse un seuil, réglage d'un certain nombre de paramètres de fonctionnement dudit dispositif de recyclage d'eau en fonction d'un profil de préférence utilisateur (222) associé audit utilisateur.

2. Procédé selon la revendication 1, ledit nombre de paramètres de fonctionnement comprenant au moins un paramètre de fonctionnement sélectionné dans le groupe constitué par une température d'eau de sortie, un débit de sortie et une durée de sortie.

3. Procédé selon la revendication 1 ou 2, ledit nombre de paramètres de fonctionnement étant réglé de telle sorte que ceux-ci varient dans le temps pendant une période d'utilisation dudit dispositif de recyclage d'eau.

4. Procédé selon l'une quelconque des revendications précédentes, lesdites données comprenant des données internes (224) générées par ledit dispositif de recyclage d'eau.

5. Procédé selon l'une quelconque des revendications précédentes, lesdites données comprenant des données externes (226) générées par un dispositif externe connecté de manière communicative audit dispositif de recyclage d'eau.

6. Procédé selon l'une quelconque des revendications précédentes, lesdites données comprenant des données historiques liées audit nombre de paramètres de fonctionnement dudit dispositif de recyclage d'eau.

7. Procédé selon l'une quelconque des revendications précédentes, lesdites données étant comparées audit profil de préférence utilisateur afin de déterminer ladite probabilité d'utilisation dudit dispositif de recyclage d'eau.

8. Procédé selon l'une quelconque des revendications précédentes, également destiné à générer un profil de préférence utilisateur (222) pour un dispositif de recyclage d'eau (100) ; ledit procédé comprenant également les étapes de :
réception de données associées à un nombre d'utilisations dudit dispositif de recyclage d'eau (100) ;
identification d'un groupe d'utilisateurs dudit dispositif de recyclage d'eau (100) sur la base desdites données, ledit groupe d'utilisateurs comprenant un certain nombre d'utilisateurs ;
détermination d'un certain nombre de paramètres de fonctionnement dudit dispositif de recyclage d'eau (100) associés à au moins une utilisation dudit dispositif de recyclage d'eau par au moins un dudit nombre d'utilisateurs ; et
génération d'un profil de préférence utilisateur (222) comprenant au moins une partie dudit nombre de paramètres de fonctionnement pour ledit au moins un dudit nombre d'utilisateurs.

9. Procédé selon la revendication 8, comprenant en outre l'étape de mise à jour dudit profil de préférence utilisateur,
identifiant ledit profil de préférence utilisateur ; recevant une rétroaction de préférence utilisateur (552) indiquant une préférence utilisateur dudit utilisateur ; mettant à jour ledit profil de préférence utilisateur en fonction de ladite rétroaction de préférence utilisateur (552).

10. Procédé selon la revendication 8 ou 9, ladite rétroaction de préférence utilisateur étant reçue en provenance dudit utilisateur par l'intermédiaire d'une interface communiquant avec ledit dispositif de recyclage d'eau.

11. Procédé selon l'une quelconque des revendications 8 à 10, ladite rétroaction de préférence utilisateur étant basée sur le comportement observé dudit au moins un dudit nombre d'utilisateurs.

12. Système comprenant :
un dispositif de recyclage d'eau (100) comprenant :
une sortie (104) configurée pour délivrer de l'eau traitée ;
un drain (106) pour collecter l'eau usée sortant de ladite sortie (104) ;
une boucle de recirculation (102) en communication liquide avec ledit drain (106) et ladite sortie (104), ladite boucle de recirculation (102) comprenant un agencement de traitement de l'eau (112) pour traiter ladite eau usée ;
un chemin d'eau externe (108) en communication liquide avec ladite boucle de recirculation (102), ledit chemin d'eau externe (108) étant relié à une sortie d'eau externe ;
une pompe de circulation (110) pour fournir un flux dans ledit dispositif de recyclage d'eau (100) ; et
un agencement de capteur configuré pour mesurer un paramètre de qualité de l'eau dans ledit dispositif de recyclage d'eau (100) ; le système étant **caractérisé en ce qu'**il comprend un moteur de prédiction (225) configuré pour :
recevoir des données indiquant une utilisation prochaine dudit dispositif de recyclage d'eau (100) par un utilisateur ;
traiter lesdites données afin de déterminer une probabilité d'utilisation dudit dispositif de recyclage d'eau (100) par ledit utilisateur ; et
régler un certain nombre de paramètres de fonctionnement dudit dispositif de recyclage d'eau (100) en fonction d'un profil de préférence utilisateur (222) associé audit utilisateur si ladite probabilité d'utilisation dépasse un seuil prédéterminé.
